(19) Europäisches Patentamt
European Patent Office
Office européen des brevets

(11) **EP 3 485 461 B1**

(12) **EUROPEAN PATENT SPECIFICATION**

(45) Date of publication and mention
of the grant of the patent:
**21.04.2021 Bulletin 2021/16**

(51) Int Cl.:
***G06T 7/529*** *(2017.01)*

(21) Application number: **17732666.7**

(22) Date of filing: **09.06.2017**

(86) International application number:
**PCT/US2017/036711**

(87) International publication number:
**WO 2018/013265 (18.01.2018 Gazette 2018/03)**

(54) **TECHNIQUES FOR DETERMINING PROXIMITY BASED ON IMAGE BLURRINESS**

VERFAHREN ZUR BESTIMMUNG DER NÄHE AUF BASIS DER BILDVERSCHWOMMENHEIT

TECHNIQUES PERMETTANT DE DÉTERMINER UNE PROXIMITÉ D'APRÈS LE FLOU D'UNE IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2016 US 201615208417**

(43) Date of publication of application:
**22.05.2019 Bulletin 2019/21**

(73) Proprietor: **Qualcomm Incorporated
San Diego, CA 92121-1714 (US)**

(72) Inventor: **PARK, Edwin, Chongwoo
San Diego, CA 92121 (US)**

(74) Representative: **Wagner & Geyer
Partnerschaft mbB
Patent- und Rechtsanwälte
Gewürzmühlstrasse 5
80538 München (DE)**

(56) References cited:
**US-A1- 2010 073 518     US-A1- 2010 080 481
US-A1- 2011 222 734**

• **YI XIN ET AL: "LBP-Based Segmentation of Defocus Blur", IEEE TRANSACTIONS ON IMAGE PROCESSING, IEEE SERVICE CENTER, PISCATAWAY, NJ, US, vol. 25, no. 4, 1 April 2016 (2016-04-01), pages 1626-1638, XP011608364, ISSN: 1057-7149, DOI: 10.1109/TIP.2016.2528042 [retrieved on 2016-02-25]**
• **SAID PERTUZ ET AL: "Analysis of focus measure operators for shape-from-focus", PATTERN RECOGNITION, vol. 46, no. 5, 1 May 2013 (2013-05-01), pages 1415-1432, XP055173399, ISSN: 0031-3203, DOI: 10.1016/j.patcog.2012.11.011**
• **LUN ZHANG ET AL: "Face Detection Based on Multi-Block LBP Representation", LECTURE NOTES IN COMPUTER SCIENCE, vol. 4642, 1 January 2007 (2007-01-01), pages 11-18, XP055200341, Berlin, Heidelberg ISSN: 0302-9743, DOI: 10.1007/978-3-540-74549-5_2 ISBN: 978-3-54-045234-8**
• **Jarrett Webb ET AL: "Chapter 8: Beyond the Basics - Proximity Detection" In: "Beginning Kinect Programming with the Microsoft Kinect SDK", 1 January 2014 (2014-01-01), Apress, XP055402116, ISBN: 978-1-4302-4104-1 pages 265-270, page 265 - page 270**

**Description**

FIELD OF THE DISCLOSURE

Aspects of the present disclosure generally relate to techniques for determining proximity, and more particularly to techniques for determining proximity based on image blurriness.

BACKGROUND

A proximity sensor may refer to a sensor capable of detecting the presence of nearby objects without any physical contact with the objects. A proximity sensor may emit an electromagnetic field or a beam of electromagnetic radiation (e.g., infrared), and detects changes in the field or a return signal. The object being sensed is often referred to as the proximity sensor's target. Different proximity sensors may be used to detect different targets. For example, a capacitive or photoelectric sensor may be suitable for a plastic target, whereas an inductive proximity sensor may be suitable for a metal target. Other example proximity sensors include an infrared light-emitting diode (LED), an ambient light sensor, a magnetic sensor, a sound-based sensor, a Doppler based sensor, an inductive sensor, and a radar sensor.

Attention is drawn to US 2010/080481 A1 describing a system of generating three-dimensional (3D) depth information. A color and object independent local blurriness estimation unit analyzes blurriness of each pixel of a two-dimensional (2D) image. Subsequently, a depth assignment unit assigns depth information to the 2D image according to the analyzed blurriness.

Attention is further drawn to US 2011/222734 A1 describing a distance evaluation method for evaluating distances from an observation point to objects within an arbitrary detectable range in a scene. The method includes the following steps. First, a focus distance is set to correspond to a lower or higher limit of a chosen detection range. Next, an image is then captured with an image acquisition system, wherein transfer function of the image acquisition system depends on the focus distance. The captured image of the scene is segmented. A blur metric is computed for each image segment of the captured image. The blur metric is associated with the distance of the objects from the observation point in each image segment.

SUMMARY

The present invention is set forth in the independent claims, respectively. Preferred embodiments of the invention are described in the dependent claims.

In some aspects, a method may include analyzing, by a device, an image sensed by an image sensor of the device. The method may include determining, by the device, a metric based on analyzing the image. The metric may provide an indication of a blurriness or a sharpness of the image. The method may include determining, by the device and based on the metric, a measure of proximity associated with the image.

In some aspects, a device may include one or more processors to analyze an image sensed by an image sensor of the device. The one or more processors may determine a metric based on analyzing the image. The metric may provide an indication of a blurriness or a sharpness of the image. The one or more processors may determine, based on the metric, a measure of proximity associated with the image.

In some aspects, a non-transitory computer-readable medium may store one or more instructions that, when executed by one or more processors of a device, cause the one or more processors to analyze an image sensed by an image sensor of the device. The one or more instructions may cause the one or more processors to determine a metric based on analyzing the image. The metric may provide an indication of a blurriness or a sharpness of the image. The one or more instructions may cause the one or more processors to determine, based on the metric, a measure of proximity associated with the image.

In some aspects, an apparatus may include means for analyzing an image sensed by an image sensor of the apparatus. The apparatus may include means for determining a metric based on analyzing the image. The metric may provide an indication of a blurriness or a sharpness of the image. The apparatus may include means for determining, based on the metric, a measure of proximity associated with the image.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purpose of illustration and description, and not as a definition of the limits of the claims.

BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.

Fig. 1 is a diagram illustrating an example environment in which techniques described herein may be implemented, in accordance with various aspects of the present disclosure.

Fig. 2 is a diagram illustrating example components of one or more devices shown in Fig. 1, such as image monitoring device(s) 110, in accordance with various aspects of the present disclosure.

Fig. 3 is a diagram illustrating an example of determining a measure of proximity based on image blurriness, in accordance with various aspects of the present disclosure.

Fig. 4 is a diagram illustrating another example of determining a measure of proximity based on image blurriness, in accordance with various aspects of the present disclosure.

Fig. 5 is a diagram illustrating another example of determining a measure of proximity based on image blurriness, in accordance with various aspects of the present disclosure.

Fig. 6 is a diagram illustrating another example process for determining a measure of proximity based on image blurriness, in accordance with various aspects of the present disclosure.

## DETAILED DESCRIPTION

The detailed description set forth below, in connection with the appended drawings, is intended as a description of various configurations and is not intended to represent the only configurations in which the concepts described herein may be practiced. The detailed description includes specific details for providing a thorough understanding of the various concepts. However, it will be apparent to those skilled in the art that these concepts may be practiced without these specific details.

Many devices, such as mobile devices (e.g., smart phones), may include a proximity sensor to detect proximity between an object and the device. These proximity sensors typically include an LED emitter and a detector, such as an ambient light sensor. The device may also include other types of sensors, such as an image sensor. When multiple sensors are present on a device, such as a smart phone, each sensor may require space on or in the device to house the components of the sensor, or may require a hole in a housing of the device to capture images, emit light, detect light, or the like. This may increase a bill of materials (BOM) cost of the device, may increase a required size of the device, may increase an amount of computing resources (e.g., memory or processor resources) used by the device, or the like. Aspects described herein use an image sensor to determine proximity based on blurriness or sharpness of a sensed image, thereby eliminating the need for a separate proximity sensor and reducing cost, required size, and utilization of computing resources of a device that uses the image sensor.

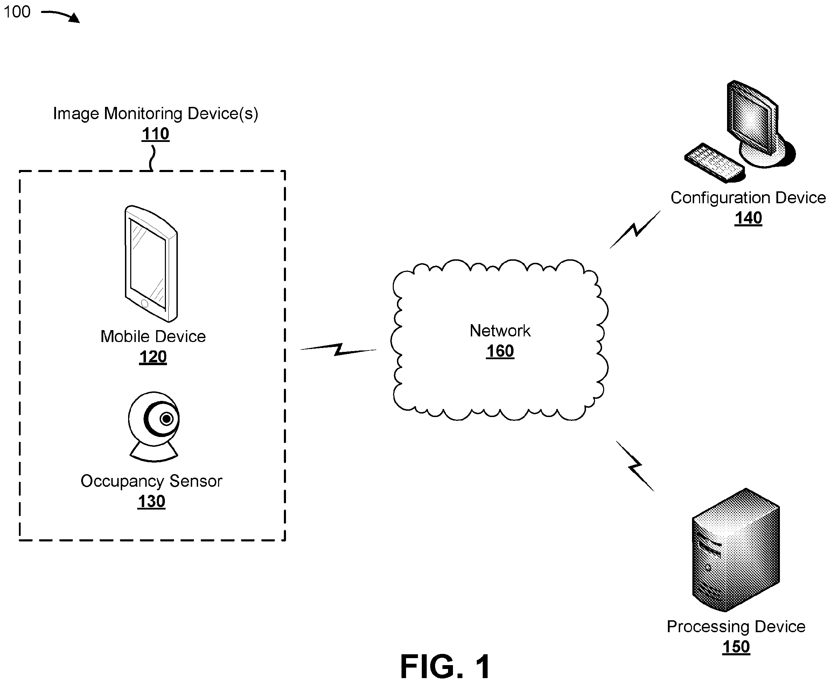

Fig. 1 is a diagram illustrating an example environment 100 in which techniques described herein may be implemented, in accordance with various aspects of the present disclosure. As shown in Fig. 1, environment 100 may include one or more image monitoring devices 110, such as a mobile device 120 and/or an occupancy sensor 130. As further shown, environment 100 may include a configuration device 140, a processing device 150, and/or a network 160. Devices of environment 100 may interconnect via wired connections, wireless connections, or a combination of wired and wireless connections.

Image monitoring device 110 includes one or more devices capable of sensing an image and determining a measure of proximity associated with the image based on a blurriness or a sharpness of the image. For example, image monitoring device 110 may include a mobile device 120, an occupancy sensor 130, or another type of device, as described in more detail below.

Mobile device 120 is an example of a type of image monitoring device 110. Mobile device 120 may include a portable electronic device, such as a wireless communication device (e.g., a user equipment, a mobile phone a smart phone, etc.), a laptop computer, a tablet computer, a gaming device, a wearable communication device (e.g., a smart wristwatch, a pair of smart eyeglasses, a smart band, etc.), or a similar type of device. In some aspects, mobile device 120 may communicate with configuration device 140 and/or processing device 150, such as to receive configuration information for configuring mobile device 120 or to provide output associated with determining proximity based on image blurriness or sharpness.

Occupancy sensor 130 is an example of a type of image monitoring device 110. Occupancy sensor 130 may include a device that detects occupancy of a space by a person or object. In some aspects, occupancy sensor 130 includes a security device, such as an eye scanner (e.g., a retina scanner, an iris scanner, etc.), a thumbprint scanner, a security camera, or the like, which may power on and/or operate based on a proximity of an object (e.g., an eye, a thumb, etc.) to occupancy sensor 130. In some aspects, occupancy sensor 130 may be implemented within a larger device, such as a kiosk, a computer, or the like. In some aspects, occupancy sensor 130 may communicate with configuration device 140 and/or processing device 150, such as to receive configuration information for configuring occupancy sensor 130 or to provide output associated with determining proximity based on image blurriness or sharpness.

Configuration device 140 includes one or more devices capable of receiving, generating, storing, processing, and/or providing information associated with determining proximity based on image blurriness or sharpness. For example, configuration device 140 may include a communication and/or computing device, such as a desktop computer, a laptop computer, a tablet computer, a wireless communication device, a server, or a similar type of device. In some aspects, configuration device 140 may receive input associated with configuring image monitoring device 110 (e.g., to determine proximity based on image blurriness), and may provide output and/or instructions to image monitoring device 110 to configure image monitoring device 110 using configuration information based on the input.

Processing device 150 includes one or more server devices capable of receiving, generating, storing, processing, and/or providing information associated with determining proximity based on image blurriness or sharpness. For example, processing device 150 may include a communication and/or computing device, such as a desktop computer, a laptop computer, a tablet computer, a wireless communication device, a server, or a similar type of device. In some aspects, processing device 150 may receive output information from image monitoring device 110, such as information associated with determining proximity based on image blurriness. In some aspects, processing device 150 may provide the output information for display, may process the output information, and/or may provide an instruction to another device (e.g., image monitoring device 110) based on processing the output information. For example, processing device 150 may provide information for re-configuring image monitoring device 110 based on processing the output information.

As an example, configuration device 140 and/or processing device 150 may adjust one or more parameters used to map a metric, indicative or blurriness or sharpness, to an estimated proximity. For example, one or more metric value may correspond to a particular proximity and/or a particular range of proximities. In some aspects, configuration device 140 and/or processing device 150 may receive input and/or may apply machine learning to adjust the parameter(s), and may provide the adjusted parameter(s) to image monitoring device 110 for use in estimating proximity based on the metric.

Network 160 includes one or more wired and/or wireless networks. For example, network 160 may include a cellular network (e.g., a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 1 are provided as an example. In practice, there may be additional devices and/or networks, fewer devices and/or networks, different devices and/or networks, or differently arranged devices and/or networks than those shown in Fig. 1. Furthermore, two or more devices shown in Fig. 1 may be implemented within a single device, or a single device shown in Fig. 1 may be implemented as multiple, distributed devices. In some aspects, when two or more devices shown in Fig. 1 are implemented within a single device, the two or more devices may communicate via a bus. Additionally, or alternatively, a set of devices (e.g., one or more devices) of environment 100 may perform one or more functions described as being performed by another set of devices of environment 100. As an example, configuration device 140 and processing device 150 may be implemented within a single device.

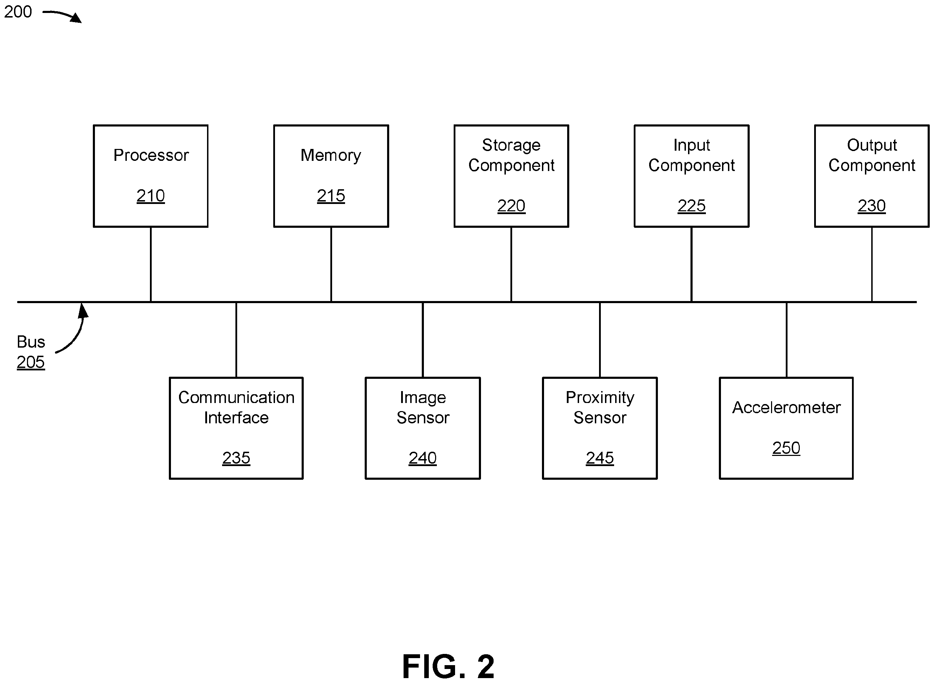

Fig. 2 is a diagram of example components of a device 200. Device 200 may correspond to image monitoring device 110, mobile device 120, occupancy sensor 130, configuration device 140, and/or processing device 150. In some aspects, image monitoring device 110, mobile device 120, occupancy sensor 130, configuration device 140, and/or processing device 150 may include one or more devices 200 and/or one or more components of device 200. As shown in Fig. 2, device 200 may include a bus 205, a processor 210, a memory 215, a storage component 220, an input component 225, an output component 230, a communication interface 235, an image sensor 240, a proximity sensor 245, and an accelerometer 250.

Bus 205 includes a component that permits communication among the components of device 200. Processor 210 includes a processor (e.g., a central processing unit (CPU), a graphics processing unit (GPU), an accelerated processing unit (APU), and/or a digital signal processor (DSP)), a microprocessor, a microcontroller, and/or any processing component (e.g., a field-programmable gate array (FPGA) and/or an application-specific integrated circuit (ASIC)) that interprets and/or executes instructions. Processor 210 is implemented in hardware, firmware, or a combination of hardware and software. In some aspects, processor 210 includes one or more processors capable of being programmed to perform a function. Memory 215 includes a random access memory (RAM), a read only memory (ROM), and/or another type of dynamic or static storage device (e.g., a flash memory, a magnetic memory, and/or an optical memory) that stores information and/or instructions for use by processor 210.

Storage component 220 stores information and/or software related to the operation and use of device 200. For example, storage component 220 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

Input component 225 includes a component that permits device 200 to receive information, such as via user input (e.g., a touch screen display, a keyboard, a keypad, a mouse, a button, a switch, and/or a microphone). Additionally, or alternatively, input component 225 may include a sensor for sensing information (e.g., an image sensor, a global positioning system (GPS) component, an accelerometer, a gyroscope, and/or an actuator). Output component 230 includes a component that provides output from device 200 (e.g., a display, a speaker, and/or one or more light-emitting diodes (LEDs)).

Communication interface 235 includes a transceiver and/or a separate receiver and transmitter that enables device 200 to communicate with other devices, such as via a wired connection, a wireless connection, or a combination of wired and wireless connections. Communication interface 235 may permit device 200 to receive information from another device and/or provide information to another device. For example, communication interface 235 may include an Ethernet interface, an optical interface, a coaxial interface, an infrared interface, a radio frequency (RF) interface, a universal serial bus (USB) interface, a Wi-Fi interface, a cellular network interface, a wireless modem, an inter-integrated circuit ($I^2C$), a serial peripheral interface (SPI), or the like.

Image sensor 240 includes a component for sensing and/or capturing an image. In some aspects, image sensor 240 includes a low power image sensor, which may not include a camera. For example, image sensor 240 may have a fixed focal length and/or a tightly bounded focal length. In some aspects, image sensor 240 and/or a focal length of image sensor 240 may be configured to capture images within a short distance from image sensor 240, such as 2 centimeters (cm), 5 cm, 10 cm, or the like. In some aspects, image sensor 240 may always be powered on when a device that includes image sensor 240 is powered on. In this way, image sensor 240 may constantly be sensing images and/or may sense images without user input indicating that an image is to be captured and/or sensed, as opposed to a camera that captures images based on user input and is not always powered on. However, in some aspects, image sensor 240 may include a camera or a camera-like component. In some aspects, device 200 may include multiple image sensors 240.

Proximity sensor 245 includes a component for determining a measure of proximity, associated with an image (e.g., sensed by image sensor 240), based on a metric indicative of blurriness or sharpness of the image. For example, proximity sensor 245 may include one or more processors 210, such as an image processor. In some aspects, proximity sensor 245 may receive an image and/or image data from image sensor 240, may analyze the image to determine the metric, and may determine the measure of proximity based on the metric. The measure of proximity may indicate a proximity of the image and/or an object in the image relative to device 200 and/or image sensor 240. In some aspects, proximity sensor 245 may determine proximity based on a single image captured by image sensor 240, as opposed to a camera which may perform an auto-focus function based on analyzing multiple images. However, in some aspects, proximity sensor 245 may determine proximity based on multiple images, such as multiple images sensed over time.

Accelerometer 250 includes a component capable of measuring acceleration. In some aspects, accelerometer 250 may be used to measure a movement of device 200. In this way, accelerometer 250 is capable of measuring movement of a user who is carrying device 200. In some aspects, accelerometer 250 may be used to determine whether device 200 is in motion or at rest, to measure a speed or acceleration of the motion of device 200, and/or to measure an orientation of device 220. This information may be used to determine an action being performed by a user of device 200, such as whether the user is bringing device 200 to an ear of the user.

Device 200 may perform one or more processes described herein. Device 200 may perform these processes in response to processor 210 executing software instructions stored by anon-transitory computer-readable medium, such as memory 215 and/or storage component 220. A computer-readable medium is defined herein as a non-transitory memory device. A memory device includes memory space within a single physical storage device or memory space spread across multiple physical storage devices.

Software instructions may be read into memory 215 and/or storage component 220 from another computer-readable medium or from another device via communication interface 235. When executed, software instructions stored in memory 215 and/or storage component 220 may cause processor 210 to perform one or more processes described herein. Additionally, or alternatively, hardwired circuitry may be used in place of or in combination with software instructions to perform one or more processes described herein. Thus, aspects described herein are not limited to any specific combination of hardware circuitry and software.

The number and arrangement of components shown in Fig. 2 are provided as an example. In practice, device 200 may include additional components, fewer components, different components, or differently arranged components than those shown in Fig. 2. Additionally, or alternatively, a set of components (e.g., one or more components) of device 200 may perform one or more functions described as being performed by another set of components of device 200.

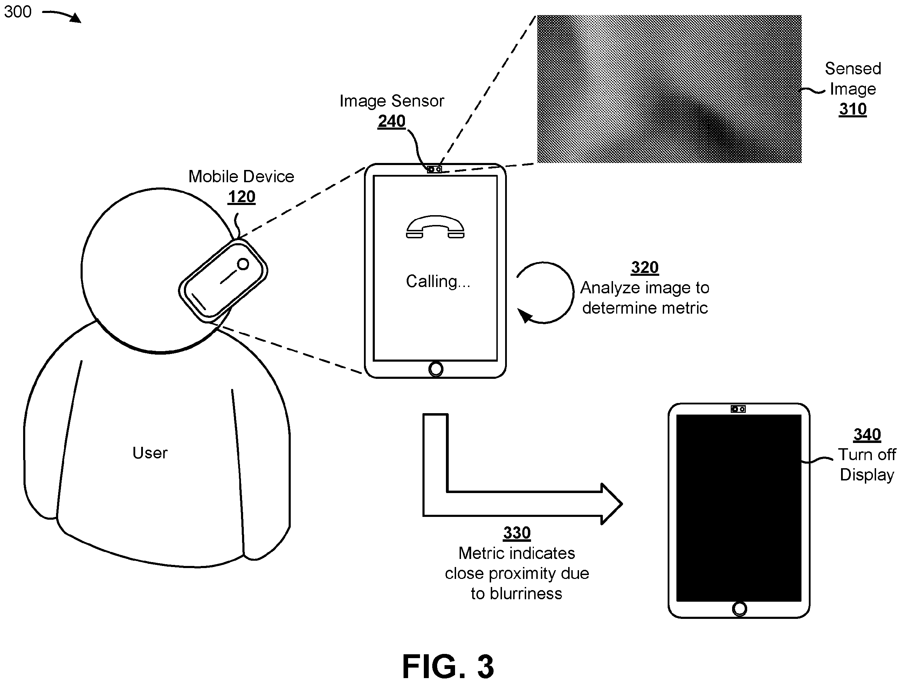

Fig. 3 is a diagram illustrating an example 300 of determining a measure of proximity based on image blurriness, in accordance with various aspects of the present disclosure.

As shown in Fig. 3, a user may move mobile device 120 to the user's ear to make or receive a phone call. As further shown, image sensor 240 of mobile device 120 may sense an image (in this case, a close-up image of the user's ear), shown as sensed image 310. In some aspects, image sensor 240 may continuously or periodically sense and/or capture images. Additionally, or alternatively, image sensor 240 may sense an image based on accelerometer data measured by accelerometer 250, or based on one or more other inputs (e.g., based on a sensor, based on time, or the like). For example, image sensor 240 may sense the image when the accelerometer data satisfies a threshold, which may indicate that the user has brought mobile device 120 to the user's ear.

Additionally, or alternatively, image sensor 240 may sense an image based on determining that an amount of detected light and/or radiation (e.g., detected by an ambient light sensor) fails to satisfy a threshold, which may indicate that the user has brought mobile device 120 to the user's ear. In some aspects, mobile device 120 may power on a light (e.g., a backlight) when the accelerometer data satisfies the threshold, which may assist image sensor 240 in sensing an image when mobile device 120 is located in a dark area.

As shown by reference number 320, mobile device 120 may analyze sensed image 310 to determine a metric associated with sensed image 310. In some aspects, the metric provides an indication of a blurriness or a sharpness of sensed image 310. In a similar manner as described above, in some aspects, mobile device 120 may analyze sensed image 310 based on determining that the accelerometer data satisfies a threshold and/or that an amount of detected light fails to satisfy a threshold. In some aspects, mobile device 120 may analyze a single image to determine the metric. In some aspects, mobile device 120 may analyze multiple images (e.g., sensed over time) to determine the metric.

As shown by reference number 330, mobile device 120 may determine a measure of proximity, associated with sensed image 310, based on the metric. For example, a relatively blurry image (e.g., associated with a metric that is less than or equal to a threshold) may indicate a closer proximity (e.g., a smaller measure of proximity) than a relatively sharp image (e.g., associated with a metric that is greater than or equal to a threshold). In some aspects, different metric values may correspond to different measures of proximity. In example 300, assume that the metric indicates a close proximity of the user's ear to image sensor 240 due to an amount of blurriness measured in sensed image 310.

Based on the metric and/or the measure of proximity, mobile device 120 may perform an action, such as controlling a display of mobile device 120. For example, mobile device 120 may adjust a property of a display. The property may include, for example, whether the display is turned on or turned off, a brightness of the display, a brightness of a backlight, a resolution, or the like. As shown in Fig. 3, as an example, mobile device 120 may turn off a display of mobile device 120, as shown by reference number 340. In this way, mobile device 120 may conserve power when a user of mobile device 120 is not likely to be looking at a display of mobile device 120 (e.g., when mobile device 120 is located near the user's ear).

While mobile device 120 is shown as turning off a display of mobile device 120 based on the measure of proximity, mobile device 120 may additionally, or alternatively, perform one or more other actions based on the measure of proximity. For example, mobile device 120 may turn on the display, may dim or brighten the display, may show or hide a user interface and/or a portion of a user interface (e.g., a soft keyboard or one or more soft input mechanisms), may provide an alert (e.g., for output by mobile device 120 and/or to another device), may turn on or turn off one or more hardware components of mobile device 120, or the like. In some aspects, mobile device 120 may perform one or more of these actions in association with masking a portion of sensed image 310, as described in more detail below.

Furthermore, while example 300 shows examples associated with mobile device 120, aspects described herein may be used in connection with one or more other image monitoring devices 110, such as occupancy sensor 130 or another type of device.

As indicated above, Fig. 3 is provided as an example. Other examples are possible and may differ from what was described above in connection with Fig. 3.

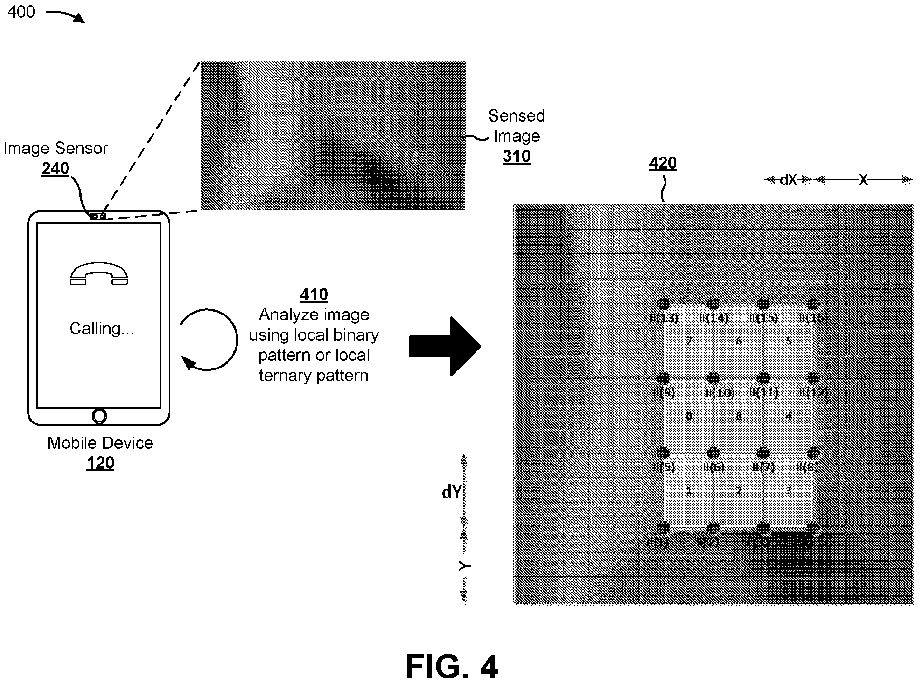

Fig. 4 is a diagram illustrating another example 400 of determining a measure of proximity based on image blurriness, in accordance with various aspects of the present disclosure.

As shown in Fig. 4, and by reference number 410, mobile device 120 may analyze sensed image 310 using one or more computer vision features, such as a local binary pattern (LBP) or a local ternary pattern (LTP), to determine the metric indicative of blurriness or sharpness of sensed image 310. Additionally, or alternatively, mobile device 120 may segment sensed image 310 into a plurality of blocks, may determine respective metrics for multiple blocks of the plurality of blocks, and may determine the metric based on the respective metrics. For example, mobile device 120 may use a multi-block local binary pattern (MB-LBP) or a multi-block local ternary pattern (MB-LTP) to determine the metric. Additionally, or alternatively, mobile device 120 may use a transition local binary pattern (tLBP) or a transition local ternary pattern (tLTP), a direction coded local binary pattern (dLBP) or a direction coded local ternary pattern (dLTP), a modified local binary pattern (mLBP) or a modified local ternary pattern (mLTP), a center-symmetric local binary pattern (CS-LBP) or a center-symmetric local ternary pattern (CS-LTP), an edge detection algorithm, an algorithm to detect texture in an image, or the like.

As an example, to compute a local binary pattern feature vector, mobile device 120 may segment sensed image 310 into cells (e.g., a cell of 16 by 16 pixels, or some other size) and, for each pixel (or group of pixels) in the cell, compare that pixel (or pixel group) to each of that pixel's (or that pixel group's) 8 neighbor pixels (or neighbor pixel groups). While some aspects are described herein in connection with analyzing individual pixels, in some aspects, mobile device 120 may analyze a group of pixels rather than an individual pixel.

As an example, if the pixel value (e.g., a brightness value, a color value, etc.) of a center pixel is greater than a neighbor pixel value, then the center pixel is assigned a first local binary pattern value (e.g., 0), and if the center pixel value is less than or equal to the neighbor pixel value, then the center pixel is assigned a second local binary pattern value (e.g., 1). When the center pixel is compared to each neighbor pixel (e.g., moving clockwise or counterclockwise around the center pixel), the result is an 8-digit binary number (which may be converted to a decimal number). Mobile device 120 may then compute a histogram, over the cell, of the frequency of occurrence of each number, may normalize the histogram, and may concatenate histograms of all of the cells to calculate the local binary pattern feature vector for sensed image 310.

In some aspects, if a feature value for a pixel or block does not satisfy a first threshold (e.g., is less than the first threshold), then mobile device 120 may mark that pixel or block as blurry. If the quantity of blurry pixels or blocks (e.g., with a feature value that does not satisfy the first threshold) satisfies a second threshold, then this may indicate that the image as a whole is blurry. Similarly, if a feature value for a pixel or block satisfies the first threshold (e.g., is greater than or equal to the first threshold), then mobile device 120 may mark that pixel or block as sharp. If the quantity of sharp pixels or blocks (e.g., with a feature value that satisfies the first threshold) satisfies a second threshold, then this may indicate that the image as a whole is sharp.

In other words, if mobile device 120 determines that a threshold quantity of pixels are similar to neighbor pixels (e.g., within a threshold degree of similarity, as indicated by a computer vision feature), then this may indicate that sensed image 310 is relatively blurry, and that a proximity of an object in sensed image 310 is relatively close to mobile device 120. Conversely, if mobile device 120 determines that a threshold quantity of pixels are different than neighbor pixels (e.g., outside a threshold degree of similarity, as indicated by a computer vision feature), then this may indicate that sensed image 310 is relatively sharp, and that a proximity of an object in sensed image 310 is relatively far from mobile device 120.

In some aspects, mobile device 120 may use a local ternary pattern to calculate the metric, rather than a local binary pattern. In this case, rather than categorizing each pixel using binary values (e.g., a 0 or a 1), mobile device 120 may use a threshold constant to categorize pixels into one of three values. For example, were p represents a value of a neighbor pixel, c represents a value of the center pixel, and $k$ represents a threshold constant, mobile device 120 may categorize the pixels as follows:

$$\begin{cases} 1, if\ p > c + k \\ 0, if\ p > c - k\ and\ p > c + k \\ -1, if\ p < c - k \end{cases}$$

In Fig. 4, reference number 420 shows an example of segmenting sensed image 310 into a plurality of blocks. Mobile device 120 may perform this segmentation, may calculate respective metrics for each of the plurality of blocks (e.g., center block 8 and neighbor blocks 0 through 7), and may determine a metric, indicative of a blurriness or sharpness of sensed image 310, based on the respective metrics. In this way, mobile device 120 may use one or more computer vision features to calculate the metric, thereby increasing the accuracy of the metric with regard to estimating a proximity associated with sensed image 310.

In some aspects, mobile device 120 may use one or more metrics associated with a particular computer vision feature to estimate the proximity associated with sensed image 310. Additionally, or alternatively, mobile device 120 may use one or more metrics associated with multiple computer vision features to estimate the proximity associated with sensed image 310. Additionally, or alternatively, mobile device 120 may use one or more metrics associated with one or more blocks (e.g., segments) of sensed image 310 to estimate the proximity associated with sensed image 310. For example, mobile device 120 may compare metrics for one or more blocks to a threshold, may determine the quantity of blocks that exceed the threshold, and may estimate the proximity based on the quantity of blocks that exceed the threshold. In some aspects, mobile device 120 may apply machine learning to determine the best combination of the metrics to be used to estimate proximity. In this way, mobile device 120 may improve the accuracy of the metric with regard to estimating a proximity associated with sensed image 310.

As indicated above, Fig. 4 is provided as an example. Other examples are possible and may differ from what was described above in connection with Fig. 4.

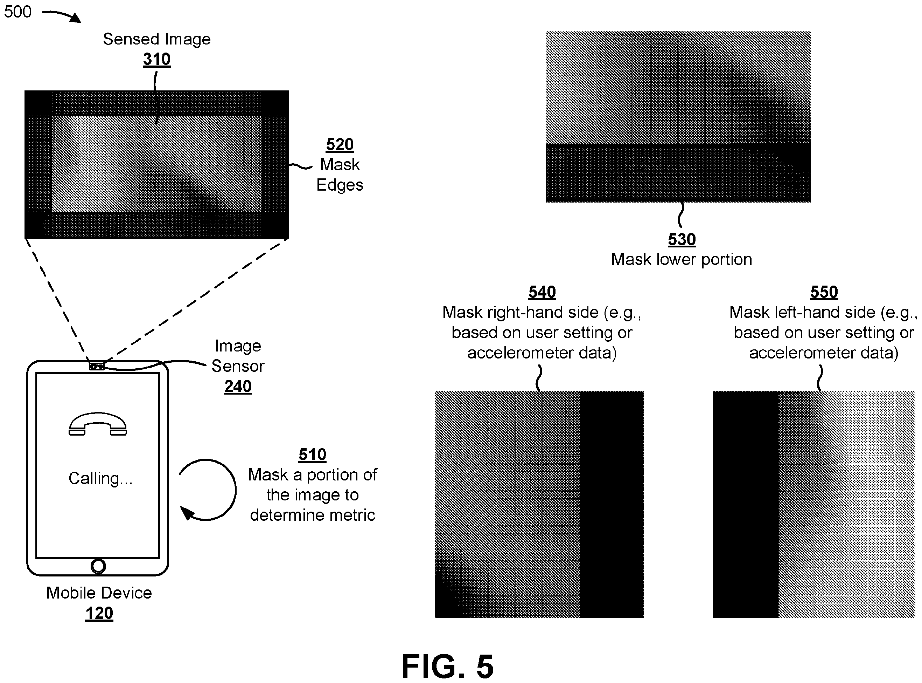

Fig. 5 is a diagram illustrating another example 500 of determining a measure of proximity based on image blurriness, in accordance with various aspects of the present disclosure.

As shown in Fig. 5, and by reference number 510, mobile device 120 may mask a portion of sensed image 310 to form a masked image, and may use the masked image to determine the metric. For example, mobile device 120 may mask the portion of sensed image 310 by discounting (e.g., reducing or eliminating) the masked portion from one or more calculations used to determine the metric, by assigning a lower weight value to the masked portion as compared to unmasked portions, or the like.

For example, mobile device 120 may mask an edge portion of sensed image 310, as shown by reference number 520. By masking the edge portion, mobile device 120 may increase a likelihood that the metric accurately corresponds to a measure of proximity by focusing on an object central to sensed image 310. As another example, mobile device 120 may mask a lower portion of sensed image 310, as shown by reference number 530. By masking the lower portion, mobile device 120 may increase a likelihood that the metric accurately corresponds to a measure of proximity when the user holds mobile device 120 at an angle, with the bottom of mobile device 120 (e.g., a microphone portion) being farther from the user's face than the top of mobile device 120 (e.g., a speaker portion). While not shown, mobile device 120 may mask an upper portion of sensed image 310, in some aspects.

As another example, mobile device 120 may mask a right portion of sensed image 310, as shown by reference number 540, or a left portion of sensed image 310, as shown by reference number 550. By masking the right portion or the left portion, mobile device 120 may increase a likelihood that the metric accurately corresponds to a measure of proximity when the user holds mobile device 120 on a particular side of the user's face. For example, if the user holds mobile device 120 on the right-hand side of the user's face (e.g., using the user's right hand), then mobile device 120 may mask a right-hand side of sensed image 310. Conversely, if the user holds mobile device 120 on the left-hand side of the user's face (e.g., using the user's left hand), then mobile device 120 may mask a left-hand side of sensed image 310. Mobile device 120 may determine whether mobile device 120 is on the right-hand side or left-hand side of the user's face, as described below.

In some aspects, mobile device 120 may receive input associated with masking sensed image 310, and may mask sensed image 310 based on the input. For example, mobile device 120 may receive accelerometer data to determine a direction of movement and/or acceleration of mobile device 120, and may use this data to determine a portion of sensed image 310 to be masked (e.g., to determine whether mobile device 120 is on the right-hand side or left-hand side of the user's face as described below). As another example, mobile device 120 may receive input indicating whether the user of mobile device 120 is right-handed or left-handed, and may use this input to determine a portion to be masked. Additionally, or alternatively, mobile device 120 may apply machine learning to accelerometer data (and/or other information or sensor data) to determine whether the user is right-handed or left-handed.

As another example, mobile device 120 may prompt a user to indicate a portion to be masked. For example, mobile device 120 may display one or more sensed images 310, and may prompt the user to outline or otherwise indicate the portion of the sensed images 310 to be masked or unmasked. In some aspects, mobile device 120 may analyze input provided on multiple sensed images 310 to determine a portion of sensed image 310 to be masked.

In some aspects, mobile device 120 may apply machine learning to determine a manner in which to mask sensed image 310. For example, mobile device 120 may mask multiple, different portions (e.g., of multiple copies of the same image or of different images), and may use feedback input to mobile device 120 to compare the accuracy of different metrics corresponding to different masked portions. In some aspects, the feedback may include user input. Additionally, or alternatively, the feedback may include an indication to undo an action performed by mobile device 120 based on the metric and/or a measure of proximity corresponding to the metric. For example, if mobile device 120 turns off a display, and the user interacts with mobile device 120 to turn on the display within a threshold amount of time, then mobile device 120 may mark the metric and the corresponding mask as inaccurate and may use this information to make more accurate determinations of the metric in the future.

While Fig. 5 shows masked portions of sensed image 310 as being contiguous, in some aspects, mobile device 120 may mask non-contiguous portions of sensed image 310. For example, mobile device 120 may mask multiple, non-contiguous portions of sensed image 310. Additionally, or alternatively, mobile device 120 may apply multiple (e.g., different) masks to generate multiple masked versions of sensed image 310, and may take one or more actions based on the multiple masked versions. For example, mobile device 120 may mask a first portion of sensed image 310 to determine whether a face is near an ear piece portion of mobile device 120, and may take an action based on this determination, such as turning a display on or off. As another example, mobile device 120 may mask a second portion of sensed image 310 to determine whether a hand is near an input portion of mobile device 120, and may take an action based on this determination, such as showing or hiding an input mechanism (e.g., a soft keyboard).

By masking sensed image 310, mobile device 120 may make a more accurate determination of a measure of proximity, thereby improving mobile device performance and a user experience. For example, by more accurately determining the measure of proximity, mobile device 120 may turn off a display when the user is holding mobile device 120 to the user's ear, and may prevent mobile device 120 from turning off the display when the user is not holding mobile device 120 to the user's ear.

While example 500 shows examples associated with mobile device 120, aspects described herein may be used in connection with one or more other image monitoring devices 110, such as occupancy sensor 130 or another type of device. For example, in some aspects, image monitoring devices 110 (e.g., occupancy sensor 130) may use environmental data, sensed from an environment of image monitoring device 110, to determine a portion of sensed image 310 to be masked.

As indicated above, Fig. 5 is provided as an example. Other examples are possible and may differ from what was described above in connection with Fig. 5.

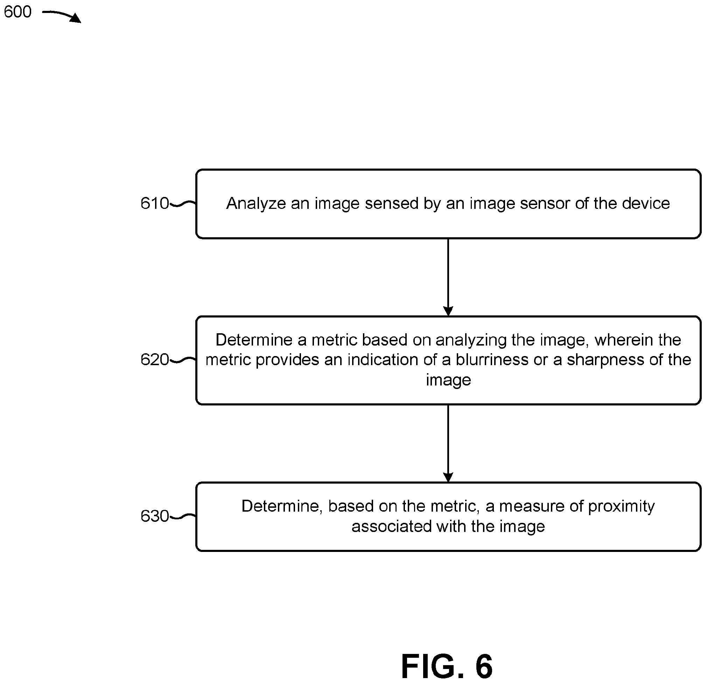

Fig. 6 is a diagram illustrating another example process 600 for determining a measure of proximity based on image blurriness, in accordance with various aspects of the present disclosure. In some aspects, one or more process blocks of Fig. 6 may be performed by image monitoring device 110 (e.g., mobile device 120, occupancy sensor 130, or the like). In some implementations, one or more process blocks of Fig. 6 may be performed by another device or a group of devices separate from or including image monitoring device 110, such as configuration device 140 and/or processing device 150.

As shown in Fig. 6, in some aspects, process 600 may include analyzing an image sensed by an image sensor of a device (block 610). For example, image monitoring device 110 may sense an image (e.g., using image sensor 240), and may analyze the image (e.g., using processor 210, proximity sensor 245, or the like). In some aspects, image monitoring device 110 may analyze an image sensed by image sensor 240 of image monitoring device 110.

As described elsewhere herein, in some aspects, image monitoring device 110 may analyze the image based on at least one of a local binary pattern or a local ternary pattern. Additionally, or alternatively, image monitoring device 110 may determine that accelerometer data (e.g., measured by and/or received from accelerometer 250) satisfies a threshold, and may analyze the image based on determining that the accelerometer data satisfies a threshold. Additional details regarding analyzing the image are provided in connection with Figs. 3-5, above.

As shown in Fig. 6, in some aspects, process 600 may include determining a metric based on analyzing the image, wherein the metric provides an indication of a blurriness or a sharpness of the image (block 620). For example, image monitoring device 110 may determine a metric based on analyzing the image. In some aspects, the metric provides an indication of a blurriness or a sharpness of the image.

As described in more detail elsewhere herein, in some aspects, image monitoring device 110 may determine the metric based on one or more computer vision features detected in the image. Additionally, or alternatively, image monitoring device 110 may mask a portion of the image, and may determine the metric based on masking the portion of the image. In some aspects, image monitoring device 110 may receive input associated with masking the image, and may mask the portion of the image based on the input. Additionally, or alternatively, image monitoring device 110 may segment the image into a plurality of blocks, may determine respective metrics for multiple blocks of the plurality of blocks, and may determine the metric based on the respective metrics. Additional details regarding determining the metric are provided in connection with Figs. 3-5, above.

As shown in Fig. 6, in some aspects, process 600 may include determining, based on the metric, a measure of proximity associated with the image (block 630). For example, image monitoring device 110 may determine a measure of proximity, associated with the image, based on the metric. In some aspects, the measure of proximity may represent a proximity or distance between an object, at least partially captured in the image, and image monitoring device 110 (and/or a component of image monitoring device 110).

As described elsewhere herein, image monitoring device 110 may perform an action based on the metric and/or the measure of proximity. For example, image monitoring device 110 may control a display of image monitoring device 110 based on the measure of proximity and/or the metric. Additionally, or alternatively, image monitoring device 110 may turn off a display, may turn on the display, may dim or brighten a display, may show or hide a user interface and/or a portion of a user interface (e.g., a soft keyboard or one or more soft input mechanisms), may provide an alert (e.g., for output by image monitoring device 110 and/or to another device), may adjust a volume level, may turn a speaker on or off, or the like. Additional details regarding determining the measure of proximity and performing the action are provided in connection with Figs. 3-5, above.

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

Techniques described herein use an image sensor to determine a measure of proximity based on blurriness or sharpness of a sensed image, thereby eliminating the need for a separate proximity sensor and reducing cost, required size, and utilization of computing resources of a device that uses the image sensor.

The foregoing disclosure provides illustration and description, but is not intended to be exhaustive or to limit the aspects to the precise form disclosed. Modifications and variations are possible in light of the above disclosure or may be acquired from practice of the aspects.

As used herein, the term component is intended to be broadly construed as hardware, firmware, or a combination of hardware and software.

As used herein, a processor includes one or more processors capable of interpreting and/or executing instructions, and/or capable of being programmed to perform a function. For example, a processor may include a central processing unit (CPU), a graphics processing unit (GPU), an accelerated processing unit (APU), a digital signal processor (DSP), a microprocessor, a microcontroller, a field-programmable gate array (FPGA), an application-specific integrated circuit (ASIC), or the like. As used herein, a processor is implemented in hardware, firmware, or a combination of hardware and software.

Some aspects are described herein in connection with thresholds. As used herein, satisfying a threshold may refer to a value being greater than the threshold, greater than or equal to the threshold, less than the threshold, less than or equal to the threshold, equal to the threshold, not equal to the threshold, or the like.

It will be apparent that systems and/or methods, described herein, may be implemented in different forms of hardware, firmware, or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based on the description herein.

A phrase referring to "at least one of" a list of items refers to any combination of those items, including single members. As an example, "at least one of: a, b, or c" is intended to cover: a; b; c; a and b; a and c; b and c; and a, b and c.

No element, act, or instruction used herein should be construed as critical or essential unless explicitly described as such. Also, as used herein, the articles "a" and "an" are intended to include one or more items, and may be used interchangeably with "one or more." Furthermore, as used herein, the terms "set" and "group" are intended to include one or more items (e.g., related items, unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

**Claims**

1.  A method, comprising:

    analyzing (610), by a device (110, 120, 130), an image (310) sensed by an image sensor (240) of the device;
    receiving, by the device, accelerometer data;
    determining a direction of at least one of a movement or an acceleration of the device based on the accelerometer data;
    determining, by the device, a portion of the image to mask based on at least one of the movement or the acceleration of the device;
    masking, by the device, the portion of the image;
    determining (620), by the device, a metric based on analyzing the image and masking the portion of the image,
    wherein the metric provides an indication of a blurriness or a sharpness of the image; and
    determining (630), by the device and based on the metric, a measure of proximity associated with the image.

2.  The method of claim 1, further comprising:
    controlling a display of the device based on the measure of proximity.

3.  The method of claim 1, wherein analyzing the image comprises:
    analyzing the image based on at least one of:

    a local binary pattern, or
    a local ternary pattern.

4.  The method of claim 1, wherein determining the metric comprises:
    determining the metric based on one or more computer vision features detected in the image.

5.  The method of claim 1, further comprising:

    determining that accelerometer data satisfies a threshold; and
    analyzing the image based on determining that the accelerometer data satisfies the threshold.

6.  The method of claim 1, further comprising:

    segmenting the image into a plurality of blocks;
    determining respective metrics for multiple blocks of the plurality of blocks; and
    determining the metric based on the respective metrics.

7.  A device (110, 120, 130), comprising:
    one or more processors (210) configured to:

    analyze an image (310) sensed by an image sensor (240) of the device;
    receive accelerometer data;
    determine a direction of at least one of a movement or an acceleration of the device based on the accelerometer data;
    determine a portion of the image to mask based on at least one of the movement or the acceleration of the device;
    mask the portion of the image;
    determine a metric based on analyzing the image and masking the portion of the image,
    wherein the metric provides an indication of a blurriness or a sharpness of the image; and
    determine, based on the metric, a measure of proximity associated with the image.

8.  The device of claim 7, wherein the one or more processors are further configured to: control a display of the device based on the measure of proximity.

**9.** The device of claim 7, wherein the one or more processors, when analyzing the image, are configured to: analyze the image based on at least one of:

a local binary pattern, or
a local ternary pattern.

**10.** The device of claim 7, wherein the one or more processors, when determining the metric, are configured to: determine the metric based on one or more computer vision features detected in the image.

**11.** The device of claim 7, wherein the one or more processors are further configured to:

determine that accelerometer data satisfies a threshold; and
analyze the image based on determining that the accelerometer data satisfies the threshold.

**12.** A non-transitory computer-readable medium storing instructions, the instructions comprising:
one or more instructions that, when executed by one or more processors of a device, cause the one or more processors to carry out the method of any of claims 1-6.

**13.** An apparatus (110, 120, 130), comprising:

means for analyzing an image (310) sensed by an image sensor (240) of the apparatus;
means for receiving accelerometer data;
means for determining a direction of at least one of a movement or an acceleration of the apparatus based on the accelerometer data;
means for determining a portion of the image to mask based on at least one of the movement or the acceleration of the apparatus;
means for masking the portion of the image;
means for determining a metric based on analyzing the image and masking the image, wherein the metric provides an indication of a blurriness or a sharpness of the image; and
means for determining, based on the metric, a measure of proximity associated with the image.

**14.** The apparatus of claim 13, further comprising:

means for controlling a display of the apparatus based on the measure of proximity; or
further comprising:

means for determining that accelerometer data satisfies a threshold; and
means for analyzing the image based on determining that the accelerometer data satisfies the threshold.

**15.** The apparatus of claim 13, wherein the means for analyzing the image comprises:

means for analyzing the image based on at least one of:

a local binary pattern,
a local ternary pattern, or
an analysis of a plurality of segments included in the image; or

wherein the means for determining the metric comprises:
means for determining the metric based on one or more computer vision features detected in the image.

**Patentansprüche**

**1.** Ein Verfahren, das Folgendes aufweist:

Analysieren (610), durch eine Einrichtung (110, 120, 130), eines Bildes (310), das durch einen Bildsensor (240) der Einrichtung abgefühlt wird;
Empfangen, durch die Einrichtung, von Beschleunigungsmesserdaten;
Bestimmen einer Richtung von wenigstens einem von einer Bewegung oder einer Beschleunigung der Einrichtung basierend auf den Beschleunigungsmesserdaten;
Bestimmen, durch die Einrichtung, eines Teils des Bildes, der maskiert werden soll, basierend auf wenigstens einem von der Bewegung oder der Beschleunigung der Einrichtung;
Maskieren, durch die Einrichtung, des Teils des Bildes;
Bestimmen (620), durch die Einrichtung, einer Metrik basierend auf Analysieren des Bildes und Maskieren des Teils des Bildes,
wobei die Metrik eine Anzeige einer Unschärfe oder Schärfe des Bildes vorsieht; und
Bestimmen (630), durch die Einrichtung und basierend auf der Metrik, einer Messung einer Nähe, die mit dem Bild assoziiert ist.

**2.** Verfahren nach Anspruch 1, das weiter Folgendes aufweist:
Steuern eine Anzeige der Einrichtung basierend auf der Messung der Nähe.

**3.** Verfahren nach Anspruch 1, wobei das Analysieren des Bildes Folgendes aufweist:
Analysieren des Bildes basierend auf wenigstens einem von:

einem lokalen binären Muster, oder
einem lokalen ternären Muster.

**4.** Verfahren nach Anspruch 1, wobei das Bestimmen der Metrik Folgendes aufweist:
Bestimmen der Metrik basierend auf einem oder mehreren Merkmalen computerbasierten Sehens bzw. Computer-Vision-Merkmalen, die in dem Bild detektiert werden.

**5.** Verfahren nach Anspruch 1, das weiter Folgendes aufweist:

Bestimmen, dass Beschleunigungsmesserdaten einen Schwellenwert erfüllen; und
Analysieren des Bildes basierend auf Bestimmen, dass die Beschleunigungsmesserdaten den Schwellenwert erfüllen.

**6.** Verfahren nach Anspruch 1, das weiter Folgendes aufweist:

Segmentieren des Bildes in eine Vielzahl von Blöcken;
Bestimmen jeweiliger Metriken für mehrere Blöcke der Vielzahl von Blöcken; und
Bestimmen der Metrik basierend auf den jeweiligen Metriken.

**7.** Eine Einrichtung (110, 120, 130), die Folgendes aufweist:
einen oder mehrere Prozessoren (210), die konfiguriert sind zum:

Analysieren eines Bildes (310), das durch einen Bildsensor (240) der Einrichtung abgefühlt wird;
Empfangen von Beschleunigungsmesserdaten;
Bestimmen einer Richtung von wenigstens einem von einer Bewegung oder einer Beschleunigung der Einrichtung basierend auf den Beschleunigungsmesserdaten;
Bestimmen eines Teils des Bildes, der maskiert werden soll, basierend auf wenigstens einem von der Bewegung oder der Beschleunigung der Einrichtung;
Maskieren des Teils des Bildes;
Bestimmen einer Metrik basierend auf Analysieren des Bildes und Maskieren des Teils des Bildes,
wobei die Metrik eine Anzeige einer Unschärfe oder einer Schärfe des Bildes vorsieht; und
Bestimmen, basierend auf der Metrik, einer Messung einer Nähe, die mit dem Bild assoziiert ist.

**8.** Einrichtung nach Anspruch 7, wobei der eine oder die mehreren Prozessoren weiter konfiguriert sind zum:
Steuern einer Anzeige der Einrichtung basierend auf der Messung der Nähe.

**9.** Einrichtung nach Anspruch 7, wobei der eine oder die mehreren Prozessoren, wenn das Bild analysiert wird, konfiguriert sind zum:
Analysieren des Bildes basierend auf wenigstens einem von:

einem lokalen binären Muster, oder
einem lokalen ternären Muster.

**10.** Einrichtung nach Anspruch 7, wobei der eine oder die mehreren Prozessoren, wenn die Metrik bestimmt wird, konfiguriert sind zum:
Bestimmen der Metrik basierend auf einem oder mehreren Computer-Vision-Merkmalen, die in dem Bild detektiert werden.

**11.** Einrichtung nach Anspruch 7, wobei der eine oder die mehreren Prozessoren weiter konfiguriert sind zum:

Bestimmen, dass Beschleunigungsmesserdaten einen Schwellenwert erfüllen; und
Analysieren des Bildes basierend auf Bestimmen, dass die Beschleunigungsmesserdaten den Schwellenwert erfüllen.

**12.** Ein nicht transitorisches computerlesbares Medium, das Instruktionen speichert, wobei die Instruktionen Folgendes aufweisen:
eine oder mehrere Instruktionen, die, wenn sie durch einen oder mehrere Prozessoren einer Einrichtung ausgeführt werden, den einen oder die mehreren Prozessoren veranlassen zum Durchführen des Verfahrens nach einem der Ansprüche 1-6.

**13.** Eine Vorrichtung (110, 120, 130), die Folgendes aufweist:

Mittel zum Analysieren eines Bildes (310), das durch einen Bildsensor (240) der Vorrichtung abgefühlt wird;
Mittel zum Empfangen von Beschleunigungsmesserdaten;
Mittel zum Bestimmen einer Richtung von wenigstens einem von einer Bewegung oder einer Beschleunigung der Vorrichtung basierend auf den Beschleunigungsmesserdaten;
Mittel zum Bestimmen eines Teils des Bildes, der maskiert werden soll, basierend auf wenigstens einem von der Bewegung oder der Beschleunigung der Vorrichtung;
Mittel zum Maskieren des Teils des Bildes;
Mittel zum Bestimmen einer Metrik basierend auf Analysieren des Bildes und Maskieren des Bildes,
wobei die Metrik eine Anzeige einer Unschärfe oder einer Schärfe des Bildes vorsieht; und
Mittel zum Bestimmen, basierend auf der Metrik, einer Messung einer Nähe, die mit dem Bild assoziiert ist.

**14.** Vorrichtung nach Anspruch 13, die weiter Folgendes aufweist:

Mittel zum Steuern eine Anzeige der Vorrichtung basierend auf der Messung der Nähe;
die weiter Folgendes aufweist:

Mittel zum Bestimmen, dass Beschleunigungsmesserdaten einen Schwellenwert erfüllen; und
Mittel zum Analysieren des Bildes basierend auf Bestimmen, dass die Beschleunigungsmesserdaten den Schwellenwert erfüllen.

**15.** Vorrichtung nach Anspruch 13, wobei die Mittel zum Analysieren des Bildes Folgendes aufweisen:
Mittel zum Analysieren des Bildes basierend auf wenigstens einem von:

einem lokalen binären Muster,
einem lokalen ternären Muster, oder
eine Analyse einer Vielzahl von Segmenten, die in dem Bild enthalten ist; oder
wobei die Mittel zum Bestimmen der Metrik Folgendes aufweisen:
Mittel zum Bestimmen der Metrik basierend auf einem oder mehreren Computer-Vision-Merkmalen, die in dem Bild detektiert werden.

**Revendications**

**1.** Procédé, comprenant :

l'analyse (610), par un dispositif (110, 120, 130), d'une image (310) captée par un capteur d'image (240) du dispositif ;
la réception, par le dispositif, de données d'accéléromètre ;
la détermination d'une direction d'au moins un élément parmi un mouvement ou une accélération du dispositif sur la base des données d'accéléromètre ;
la détermination, par le dispositif, d'une partie de l'image à masquer sur la base d'au moins un élément parmi le mouvement ou l'accélération du dispositif ;
le masquage, par le dispositif, de la partie de l'image ;
la détermination (620), par le dispositif, d'une métrique sur la base de l'analyse de l'image et du masquage de la partie de l'image,
dans lequel la métrique fournit une indication sur un flou ou une netteté de l'image ; et

la détermination (630), par le dispositif et sur la base de la métrique, d'une mesure de proximité associée à l'image.

**2.** Procédé selon la revendication 1, comprenant en outre :
la commande d'un affichage du dispositif sur la base de la mesure de proximité.

**3.** Procédé selon la revendication 1, dans lequel l'analyse de l'image comprend :
l'analyse de l'image sur la base d'au moins un élément parmi :

un motif binaire local, ou
un motif ternaire local.

**4.** Procédé selon la revendication 1, dans lequel la détermination de la métrique comprend :
la détermination de la métrique sur la base d'une ou de plusieurs caractéristiques de vision par ordinateur détectées dans l'image.

**5.** Procédé selon la revendication 1, comprenant en outre :

la détermination que les données d'accéléromètre satisfont un seuil ; et
l'analyse de l'image sur la base de la détermination que les données d'accéléromètre satisfont le seuil.

**6.** Procédé selon la revendication 1, comprenant en outre :

la segmentation de l'image en une pluralité de blocs ;
la détermination de métriques respectives pour plusieurs blocs de la pluralité de blocs ; et
la détermination de la métrique sur la base des métriques respectives.

**7.** Dispositif (110, 120, 130) comprenant :
un ou plusieurs processeurs (210) configurés pour :

analyser une image (310) captée par un capteur d'image (240) du dispositif ;
recevoir des données d'accéléromètre ;
déterminer une direction d'au moins un élément parmi un mouvement ou une accélération du dispositif sur la base des données d'accéléromètre ;
déterminer une partie de l'image à masquer sur la base d'au moins un élément parmi le mouvement ou l'accélération du dispositif ;
masquer la partie de l'image ;
déterminer une métrique sur la base de l'analyse de l'image et du masquage de la partie de l'image,
dans lequel la métrique fournit une indication sur un flou ou une netteté de l'image ; et déterminer, sur la base de la métrique, une mesure de proximité associée à l'image.

8. Dispositif selon la revendication 7, dans lequel lesdits un ou plusieurs processeurs sont en outre configurés pour :
commander un affichage du dispositif sur la base de la mesure de proximité.

9. Dispositif selon la revendication 7, dans lequel lesdits un ou plusieurs processeurs, pendant l'analyse de l'image, sont configurés pour :
analyser l'image sur la base d'au moins un élément parmi :

un motif binaire local, ou
un motif ternaire local.

10. Dispositif selon la revendication 7, dans lequel lesdits un ou plusieurs processeurs, pendant la détermination de la métrique, sont configurés pour :
déterminer la métrique sur la base d'une ou de plusieurs caractéristiques de vision par ordinateur détectées dans l'image.

11. Dispositif selon la revendication 7, dans lequel lesdits un ou plusieurs processeurs sont configurés en outre pour :

déterminer que les données d'accéléromètre satisfont un seuil ; et
analyser l'image sur la base de la détermination que les données d'accéléromètre satisfont le seuil.

12. Support lisible par ordinateur non transitoire stockant des instructions, les instructions comprenant :
une ou plusieurs instructions qui, lorsqu'elles sont exécutées par un ou plusieurs processeurs d'un dispositif, amènent lesdits un ou plusieurs processeurs à mettre en oeuvre le procédé selon l'une quelconque des revendications 1 à 6.

13. Appareil (110, 120, 130) comprenant :

des moyens pour analyser une image (310) captée par un capteur d'image (240) de l'appareil ;
des moyens pour recevoir des données d'accéléromètre ;
des moyens pour déterminer une direction d'au moins un élément parmi un mouvement ou une accélération de l'appareil sur la base des données d'accéléromètre ;
des moyens pour déterminer une partie de l'image à masquer sur la base d'au moins un élément parmi un mouvement ou une accélération de l'appareil ;
des moyens pour masquer la partie de l'image ;
des moyens pour déterminer une métrique sur la base de l'analyse de l'image et du masquage de la partie de l'image,
dans lequel la métrique fournit une indication sur un flou ou une netteté de l'image ; et
des moyens pour déterminer, sur la base de la métrique, une mesure de proximité associée à l'image.

14. Appareil selon la revendication 13, comprenant en outre :

des moyens pour commander un affichage de l'appareil sur la base de la mesure de proximité ; ou
comprenant en outre :

des moyens pour déterminer que des données d'accéléromètre satisfont un seuil ; et
des moyens pour analyser l'image sur la base de la détermination que les données d'accéléromètre satisfont le seuil.

15. Appareil selon la revendication 13, dans lequel les moyens pour analyser l'image, comprennent :

des moyens pour analyser l'image sur la base d'au moins un élément parmi :

un motif binaire local,
un motif ternaire local, ou
une analyse d'une pluralité de segments inclus dans l'image ; ou

dans lequel les moyens pour déterminer la métrique comprennent :
des moyens pour déterminer la métrique sur la base d'une ou de plusieurs caractéristiques de vision par ordinateur détectées dans l'image.

Image Monitoring Device(s)
**110**

Mobile Device
**120**

Occupancy Sensor
**130**

Network
**160**

Configuration Device
**140**

Processing Device
**150**

**FIG. 1**

EP 3 485 461 B1

**FIG. 2**

FIG. 3

FIG. 4

EP 3 485 461 B1

500

Sensed Image
**310**

**520**
Mask Edges

Image Sensor
**240**

**510**
Mask a portion of the image to determine metric

Calling...

Mobile Device
**120**

**530**
Mask lower portion

**540**
Mask right-hand side (e.g., based on user setting or accelerometer data)

**550**
Mask left-hand side (e.g., based on user setting or accelerometer data)

**FIG. 5**

EP 3 485 461 B1

EP 3 485 461 B1

600 ⟶

```
610⟶  ┌─────────────────────────────────────────────────────────┐
       │   Analyze an image sensed by an image sensor of the device │
       └─────────────────────────────────────────────────────────┘
                              │
                              ▼
620⟶  ┌─────────────────────────────────────────────────────────┐
       │  Determine a metric based on analyzing the image, wherein the │
       │  metric provides an indication of a blurriness or a sharpness of the │
       │                         image                            │
       └─────────────────────────────────────────────────────────┘
                              │
                              ▼
630⟶  ┌─────────────────────────────────────────────────────────┐
       │   Determine, based on the metric, a measure of proximity  │
       │               associated with the image                   │
       └─────────────────────────────────────────────────────────┘
```

# FIG. 6

**EP 3 485 461 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010080481 A1
- US 2011222734 A1